(19) Europäisches Patentamt
European Patent Office
Office européen des brevets

(11) **EP 3 327 415 B1**

(12) **EUROPÄISCHE PATENTSCHRIFT**

(45) Veröffentlichungstag und Bekanntmachung des Hinweises auf die Patenterteilung:
**10.04.2019   Patentblatt 2019/15**

(51) Int Cl.:
***G01K 7/18*** *(2006.01)*

(21) Anmeldenummer: **17167473.2**

(22) Anmeldetag: **09.05.2008**

(54) **WIDERSTANDSTHERMOMETER**

RESISTANCE THERMOMETER

THERMOMÈTRE À RÉSISTANCE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.05.2007   DE 102007023434**

(43) Veröffentlichungstag der Anmeldung:
**30.05.2018   Patentblatt 2018/22**

(62) Dokumentnummer(n) der früheren Anmeldung(en) nach Art. 76 EPÜ:
**08750232.4 / 2 145 166**

(73) Patentinhaber: **Innovative Sensor Technology IST AG**
**9642 Ebnat-Kappel (CH)**

(72) Erfinder: **Holoubek, Jiri**
**756 61 Roznov pod Radhostem (CZ)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 471 138      DE-A1- 4 020 383**
**DE-A1- 4 300 084      DE-C1- 19 540 194**
**JP-A- 2 058 304      JP-A- H04 265 828**
**JP-A- 2004 239 700**

**Beschreibung**

Die Erfindung bezieht sich auf ein Widerstandsthermometer, mit mindestens einem Substrat, und mit mindestens einem Widerstandelement, welches auf dem Substrat angeordnet ist.

Bekannt sind im Stand der Technik Temperaturmessgeräte, bei welchen der elektrische und von der Temperatur abhängige Widerstand eines Widerstandelements gemessen und ausgewertet wird. Für die Auswertung ist es erforderlich, dass die Temperatur-Widerstands-Kurve, d.h. die diesbezügliche Kennlinie des Elements bekannt ist.

Bekannt sind insbesondere Widerstandselemente, welche mit Dünnschichttechniken auf ein elektrisch isolierendes Substrat aufgebracht werden. Die Dünnschicht besteht in der Regel aus Platin oder Nickel mit oder ohne Dotierung und das Substrat besteht zumeist aus $Al_2O_3$.

Im Stand der Technik ist bereits die Auswirkung der Beschaffenheit des Substrats auf die Kennlinie des darauf befindlichen Widerstandselements bekannt. Den beiden Dokumenten DE 43 00 084 A1 und DE 195 40 194 C1 lässt sich beispielsweise entnehmen, dass die Kennlinie des Widerstandsthermometers die gewünschten Eigenschaften aufweist, wenn der Wärmeausdehnungskoeffizient (TCE) des Substrats aus Magnesiumtitanat im Bereich zwischen 8,5 und 10,5 ppm/K liegt. Die EP 0 471 138 A2 beschreibt einen Temperaturmesswiderstand, der einen Träger aus einem Stahl-Substrat verwendet. Das Stahl-Substrat der EP'138 weist auf der zur Aufbringung eines Platin-Dünnfilms vorgesehenen Oberfläche eine elektrisch isolierende Zwischenschicht auf.

Bei den Ausgestaltungen des Standes der Technik hat das Substrat immer noch einen sehr großen Einfluss auf die Kennlinie bzw. auf den TCR-Wert, d.h. den Temperaturkoeffizienten des Widerstandsthermometers. Insbesondere ist es im Stand der Technik nicht möglich, den TCR-Wert des Widerstandsthermometers in die Nähe des Materials des Widerstandselements als Bulk-Material zu bringen. Bulk-Material bezieht sich auf einen Zustand eines Materials im Gegensatz zu Dünnschicht oder Pulverform und bedeutet, dass das Material in einer Form vorliegt, so dass es sich als unendlich große Menge in allen drei Dimensionen aus atomarer Sicht betrachten lässt. Beispielsweise ist es gemäß dem Stand der Technik praktisch nicht möglich, Platinmesswiderstände mit einem TCR-Wert im Bereich oberhalb 3900 ppm/K zu erzielen, wobei solche Werte typisch für gewickelte Messwiderstände aus reinem Platin sind. Weiterhin weicht die Form der Kennlinie auch bei Widerstandsthermometern mit niedrigeren TCR-Werten (typisch bei 3850 ppm/K) von der gemäß DIN IEC 751 vorgeschriebenen Form ab. Dies hat zur Folge, dass insbesondere bei breiteren Temperaturbereichen bzw. bei hohen Genauigkeitsanforderungen das vorgeschriebene Toleranzband verlassen wird. Weitere negative Effekte von mangelhafter Materialanpassung besteht in der Hysterese (Memory-Effekt) und in einer mangelhafte Langzeitstabilität der Messwerte.

Der Erfindung liegt die Aufgabe zugrunde, ein Widerstandsthermometer anzugeben, dessen Temperaturkoeffizient (TCR) oberhalb von 3900 ppm/K liegt.

Die Aufgabe wird erfindungsgemäß dadurch gelöst, dass das Substrat im Wesentlichen aus einem Material besteht, dessen Wärmeausdehnungskoeffizient im Wesentlichen größer als 10,5 ppm/K ist, und dass mindestens eine elektrisch isolierende Trennschicht vorgesehen ist, welche im Wesentlichen zwischen dem Widerstandselement und dem Substrat angeordnet ist. Der Aufbau des Widerstandsthermometers besteht somit zumindest aus Substrat - Trennschicht - Widerstandselement. Die Trennschicht ist vor allem dafür erforderlich, um einen elektrischen Kontakt zwischen dem Substrat und der Widerstandselement zu verhindern.

Eine Ausgestaltung der Erfindung sieht vor, dass das Substrat im Wesentlichen aus einem Material besteht, dessen Wärmeausdehnungskoeffizient im Wesentlichen größer als 11 ppm/K ist.

Eine Ausgestaltung der Erfindung beinhaltet, dass das Substrat im Wesentlichen aus einem Material besteht, dessen Wärmeausdehnungskoeffizient im Wesentlichen zwischen 10,5 und 13,5 ppm/K liegt.

Eine Ausgestaltung der Erfindung sieht vor, dass das Widerstandselement mit einer Dünnschichttechnik auf dem Substrat aufgetragen ist. Beispiele für solche Dünnschichttechniken sind Sputtern oder Aufdampfen.

Eine Ausgestaltung der Erfindung beinhaltet, dass das Widerstandselement im Wesentlichen aus Platin und/oder Nickel besteht.

Eine Ausgestaltung der Erfindung sieht vor, dass das Widerstandselement frei von einer Fremdlegierung oder mit einer Fremdlegierung versehen ist.

Eine Ausgestaltung der Erfindung beinhaltet, dass das Widerstandselement eine Schichtdicke zwischen 0,1 $\mu$m und 5 $\mu$m aufweist.

Eine weitere Ausgestaltung der Erfindung sieht vor, dass das Widerstandselement eine Schichtdicke zwischen 0,1 $\mu$m und 2 $\mu$m aufweist.

Eine Ausgestaltung der Erfindung sieht vor, dass die elektrisch isolierende Trennschicht aus Glas, Keramik oder Glaskeramik besteht.

Eine Ausgestaltung der Erfindung beinhaltet, dass die elektrisch isolierende Trennschicht eine Dicke zwischen 0,5 $\mu$m und 100 $\mu$m aufweist.

Eine Ausgestaltung der Erfindung sieht vor, dass die elektrisch isolierende Trennschicht eine Dicke zwischen 0,5 $\mu$m und 50 $\mu$m aufweist.

Eine Ausgestaltung der Erfindung sieht vor, dass die elektrisch isolierende Trennschicht einen Wärmeausdehnungskoeffizienten zwischen 0,4 und 8 ppm/K aufweist.

Eine Ausgestaltung der Erfindung beinhaltet, dass mindestens eine elektrisch isolierende Abdeckung vorgesehen ist, welche im Wesentlichen auf der von dem Substrat abgewandten Seite des Widerstandselements angeordnet ist.

Eine Ausgestaltung der Erfindung sieht vor, dass die elektrisch isolierende Abdeckung im Wesentlichen aus einem Glas, Keramik, Glaskeramik oder einer Polymerschicht besteht.

Eine Ausgestaltung der Erfindung beinhaltet, dass die elektrisch isolierende Abdeckung eine Dicke zwischen 0,5 $\mu$m und 100 $\mu$m aufweist.

Eine Ausgestaltung der Erfindung sieht vor, dass das Substrat im Wesentlichen aus Zirkoniumoxid besteht. Zirkoniumoxid ($ZrO_2$) wird ab einer Temperatur oberhalb von 200°C elektrisch leitfähig, so dass die oben genannte Trennschicht zwischen dem Substrat und dem Widerstandselement vorteilhaft ist.

Eine Ausgestaltung der Erfindung beinhaltet, dass die Dicke des Substrats zwischen 0,15 und 1,0 mm liegt.

Eine Ausgestaltung der Erfindung beinhaltet, dass die Dicke des Substrats zwischen 0,15 und 0,5 mm liegt.

Eine Ausgestaltung der Erfindung beinhaltet, dass die Dicke des Substrats zwischen 0,2 und 1,0 mm liegt. Solche dünnen Substrate, insbesondere aus Zirkoniumoxid haben beispielsweise die Vorteile, dass sie eine geringe Hysterese des Widerstandsthermometers mit sich bringen und auch zu einer verbesserten Kennlinie führen. Ein Substrat aus Zirkoniumoxid mit einer Dicke von 0,38 mm führt beispielsweise zu einem TCR-Wert von ungefähr 3913 ppm/K.

Eine Ausgestaltung der Erfindung sieht vor, dass das Substrat im Wesentlichen aus Zirkoniumoxid besteht, dass die Dicke des Substrats zwischen 0,2 und 1,0 mm liegt, und dass die elektrisch isolierende Trennschicht im Wesentlichen zwischen dem Widerstandselement und dem Substrat angeordnet ist. Die Trennschicht verhindert den elektrischen Kontakt zwischen dem Substrat und dem Widerstandselement, was besonders wichtig ist, da Zirkonium ab einer Temperatur oberhalb von ca. 200°C elektrisch leitfähig wird. Vorteilhaft ist die Ausgestaltung, dass das Substrat im Wesentlichen aus einem Material besteht, dessen Wärmeausdehnungskoeffizient im Wesentlichen zwischen 10,5 und 13,5 ppm/K liegt. Die hier genannte Ausgestaltung bringt es mit sich, dass das Widerstandsthermometer einen Temperaturkoeffizienten oberhalb von 3900 ppm/K aufweist.

Eine Ausgestaltung der Erfindung beinhaltet, dass die Bestandteile des Widerstandsthermometers derartig ausgestaltet und aufeinander abgestimmt sind, dass der resultierende effektive Wärmeausdehnungskoeffizient ($TCE_{eff}$) einem vorgebbaren Wert entspricht.

Eine Ausgestaltung der Erfindung sieht vor, dass der effektive Wärmeausdehnungskoeffizient ($TCE_{eff}$) größer als oder gleich dem Wärmeausdehnungskoeffizient des Bulk-Metalls des Widerstandselements ist.

Eine Ausgestaltung der Erfindung beinhaltet, dass der effektive Wärmeausdehnungskoeffizient ($TCE_{eff}$) des Widerstandsthermometers im Wesentlichen durch folgende Form näherungsweise gegeben ist:

$$TCE_{eff} = \frac{\sum_{i=1}^{N} TCE_i * d_i * E_i * F_i}{\sum_{i=1}^{N} d_i * E_i * F_i},$$

wobei N die Anzahl der Bestandteile des Widerstandsthermometers ist, wobei die Laufzahl i die einzelnen Bestandteile bezeichnet, wobei $TCE_i$ den Wärmeausdehnungskoeffizienten, $d_i$ die Dicke und $E_i$ die Elastizität der einzelnen Bestandteile bezeichnet, und wobei $F_i$ einen geometrischen Faktor zwischen 0 und 1 der einzelnen Bestandteile bezeichnet. Der geometrische Faktor berücksichtigt unter anderem die räumliche Anordnung der einzelnen Komponenten bzw. der einzelnen Schichten. Die Formel gibt dabei eine gewichtete Interpolation über das Widerstandsthermometer wieder.

Die Erfindung sieht vor, dass auf der von dem Widerstandselement abgewandten Seite des Substrats mindestens eine innere Ausgleichsschicht vorgesehen ist. Die innere Ausgleichsschicht dient der Kompensation von Wärmeausdehnungseffekten der Trennschicht.

Die Erfindung beinhaltet, dass die innere Ausgleichsschicht in Bezug auf eine durch die Temperatur verursachte Änderung der Ausdehnung im Wesentlichen gleich wie die Trennschicht beschaffen ist.

Eine Ausgestaltung der Erfindung sieht vor, dass die innere Ausgleichsschicht im Wesentlichen aus dem gleichen Material wie die Trennschicht besteht.

Eine Ausgestaltung der Erfindung sieht vor, dass auf der von dem Widerstandselement abgewandten Seite des Substrats mindestens eine äußere Ausgleichsschicht vorgesehen ist. Die äußere Ausgleichsschicht dient der Kompensation von Wärmeausdehnungseffekten der Abdeckung.

Eine Ausgestaltung der Erfindung beinhaltet, dass die äußere Ausgleichsschicht auf der vom Substrat abgewandten Seite der inneren Ausgleicheinheit angeordnet ist.

Eine Ausgestaltung der Erfindung sieht vor, dass die äußere Ausgleichsschicht in Bezug auf eine durch die Temperatur verursachte Änderung der Ausdehnung im Wesentlichen gleich wie die Abdeckung beschaffen ist.

Eine Ausgestaltung der Erfindung beinhaltet, dass die äußere Ausgleichsschicht in Wesentlichen aus dem gleichen Material wie die Abdeckung besteht.

Eine Ausgestaltung der Erfindung beinhaltet, dass die Abdeckung im Wesentlichen aus dem gleichem Material wie die Trennschicht besteht.

Eine Ausgestaltung der Erfindung sieht vor, dass das Substrat im Wesentlichen aus Zirkoniumoxid besteht, dass das Substrat eine Dicke zwischen 0,3 und 0,5 mm aufweist, dass das Widerstandselement im Wesentlichen aus Platin besteht, dass das Widerstandselement eine Dicke zwischen 0,45 und 2 $\mu$m aufweist, dass die Trennschicht eine Dicke zwischen 0,5 und 40 $\mu$m aufweist und im Wesentlichen aus einer Glaskeramik mit einem Wärmeausdehnungskoeffizienten zwischen 6 und 7,5 ppm/K besteht, und dass die Abdeckung eine Dicke zwischen 0,5 und 40 $\mu$m aufweist und im Wesentlichen aus einer Glaskeramik mit einem Wärmeausdehnungskoeffizienten zwischen 6 und 7,5 ppm/K besteht. Eine solche Anordnung führt dazu, dass der Temperaturkoeffizienten des Widerstandsthermometers zwischen 3910 und 3925 ppm/K liegt.

Eine Ausgestaltung der Erfindung sieht vor, dass das Substrat im Wesentlichen aus Zirkoniumoxid besteht, dass das Substrat eine Dicke zwischen 0,3 und 0,7 mm aufweist, dass das Widerstandselement im Wesentlichen aus Platin besteht, dass das Widerstandselement eine Dicke zwischen 0,45 und 2 $\mu$m aufweist, dass die Trennschicht eine Dicke zwischen 5 und 40 $\mu$m aufweist und im Wesentlichen aus einer Glaskeramik mit einem Wärmeausdehnungskoeffizienten zwischen 6 und 7,5 ppm/K besteht, und dass die Abdeckung eine Dicke zwischen 5 und 40 $\mu$m aufweist und im Wesentlichen aus einer Glaskeramik mit einem Wärmeausdehnungskoeffizienten zwischen 6 und 7,5 ppm/K besteht. Eine solche Anordnung führt dazu, dass der Temperaturkoeffizienten des Widerstandsthermometers zwischen 3910 und 3925 ppm/K liegt.

Eine Ausgestaltung der Erfindung beinhaltet, dass das Substrat im Wesentlichen aus Zirkoniumoxid besteht, dass das Substrat eine Dicke zwischen 0,3 und 0,5 mm aufweist, dass das Widerstandselement im Wesentlichen aus Platin mit mindestens einer Fremdlegierung besteht, dass das Widerstandselement eine Dicke zwischen 0,45 und 2 $\mu$m aufweist, dass die Trennschicht eine Dicke zwischen 0,5 und 40 $\mu$m aufweist und im Wesentlichen aus einer Glaskeramik mit einem Wärmeausdehnungskoeffizienten zwischen 6 und 7,5 ppm/K besteht, und dass die Abdeckung eine Dicke zwischen 5 und 40 $\mu$m aufweist und im Wesentlichen aus einer Glaskeramik mit einem Wärmeausdehnungskoeffizienten zwischen 6 und 7,5 ppm/K besteht. Eine solche Anordnung erzeugt einen Temperaturkoeffizienten des Widerstandsthermometers von 3850 ppm/K mit einer Kennlinie gemäß DIN IEC 751.

Eine Ausgestaltung der Erfindung beinhaltet, dass das Substrat im Wesentlichen aus Zirkoniumoxid besteht, dass das Substrat eine Dicke zwischen 0,3 und 0,7 mm aufweist, dass das Widerstandselement im Wesentlichen aus Platin mit mindestens einer Fremdlegierung besteht, dass das Widerstandselement eine Dicke zwischen 0,45 und 2 $\mu$m aufweist, dass die Trennschicht eine Dicke zwischen 5 und 40 $\mu$m aufweist und im Wesentlichen aus einer Glaskeramik mit einem Wärmeausdehnungskoeffizienten zwischen 6 und 7,5 ppm/K besteht, und dass die Abdeckung eine Dicke zwischen 5 und 40 $\mu$m aufweist und im Wesentlichen aus einer Glaskeramik mit einem Wärmeausdehnungskoeffizienten zwischen 6 und 7,5 ppm/K besteht. Eine solche Anordnung erzeugt einen Temperaturkoeffizienten des Widerstandsthermometers von 3850 ppm/K mit einer Kennlinie gemäß DIN IEC 751.

Eine Ausgestaltung der Erfindung sieht vor, dass das Substrat im Wesentlichen aus Zirkoniumoxid besteht, dass das Substrat eine Dicke zwischen 0,3 und 0,5 mm aufweist, dass das Widerstandselement im Wesentlichen aus Nickel besteht, dass das Widerstandselement eine Dicke zwischen 0,1 und 2 $\mu$m aufweist, dass die Trennschicht eine Dicke zwischen 0,5 und 40 $\mu$m aufweist, dass die Trennschicht im Wesentlichen aus einer Glaskeramik besteht, dass die Trennschicht einen Wärmeausdehnungskoeffizienten zwischen 6 und 7,5 ppm/K aufweist, und dass die Abdeckung im Wesentlichen aus einem Polymer oder aus Glas besteht. Eine solche Anordnung bewirkt einen Temperaturkoeffizienten des Widerstandsthermometers zwischen 6700 und 6740 ppm/K.

Eine Ausgestaltung der Erfindung sieht vor, dass das Substrat im Wesentlichen aus Zirkoniumoxid besteht, dass das Substrat eine Dicke zwischen 0,3 und 0,7 mm aufweist, dass das Widerstandselement im Wesentlichen aus Nickel besteht, dass das Widerstandselement eine Dicke zwischen 0,3 und 2 $\mu$m aufweist, dass die Trennschicht eine Dicke zwischen 5 und 40 $\mu$m aufweist, dass die Trennschicht im Wesentlichen aus einer Glaskeramik besteht, dass die Trennschicht einen Wärmeausdehnungskoeffizienten zwischen 6 und 7,5 ppm/K aufweist, und dass die Abdeckung im Wesentlichen aus einem Polymer oder aus Glas besteht. Eine solche Anordnung bewirkt einen Temperaturkoeffizienten des Widerstandsthermometers zwischen 6700 und 6740 ppm/K.

Eine Ausgestaltung der Erfindung beinhaltet, dass das Substrat im Wesentlichen aus Zirkoniumoxid besteht, welches zwischen 3 Mol-% und 8 Mol-% mit Yttrium stabilisiert ist.

Eine Ausgestaltung der Erfindung sieht vor, dass das Substrat im Wesentlichen aus Zirkoniumoxid besteht, welches zwischen 3 Mol-% und 11 Mol-% mit Scandium stabilisiert ist.

Eine Ausgestaltung der Erfindung beinhaltet, dass das Substrat im Wesentlichen aus Zirkoniumoxid besteht, welches zwischen 0,5 Mol-% und 4 Mol-% mit Magnesium stabilisiert ist.

Die Erfindung wird anhand der nachfolgenden Zeichnung näher erläutert. Es zeigt:

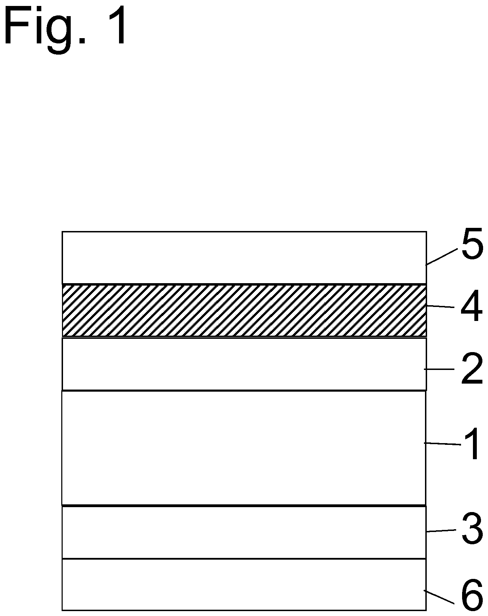

Fig. 1: eine schematische Darstellung eines Schnitts durch ein erfindungsgemäßes Widerstandsthermometer.

In der Fig. 1 ist ein Schnitt durch ein schematisches Widerstandsthermometer dargestellt. Elektrische Kontakte, Gehäuse usw. sind somit nicht dargestellt. Die Temperatur wird dabei durch Auswertung des elektrischen Widerstandes ermittelt. Hierfür ist Wissen über die Kennlinie des Widerstandsthermometers erforderlich.

Das Widerstandsthermometer oder allgemein der Temperatursensor besteht hier aus einem Substrat 1, auf welchem eine elektrisch isolierende Trennschicht 2 aufgebracht.

Oberhalb der Trennschicht 2 befindet sich das Widerstandelement 4, welches der eigentlichen Messung dient. Dabei handelt es sich um eine Metallschicht, welche eine passende Struktur, z.B. ein Mäandermuster aufweist und durch Dünnschicht- oder Dickschichttechniken aufgebracht wird. Die Trennschicht 2 ist insbesondere für den Fall vorteilhaft, dass das Substrat aus Zirkoniumoxid ($ZrO_2$) besteht, welches bei einer Temperatur oberhalb von 200°C elektrisch leitend wird. D.h. die Trennschicht 2 verhindert den direkten elektrischen Kontakt zwischen dem ggf. leitenden Substrat 1 und dem Widerstandelement 4, welches hier insbesondere als Schicht ausgestaltet und verstanden wird. Oberhalb des Widerstandselements ist eine Abdeckung 5 vorgesehen, welche u.a. der Passivierung und allgemein dem Schutz der Metallschicht des Widerstandselements 4 dient.

In der hier gezeigten Darstellung sind weiterhin eine innere 3 und eine äußere Ausgleichsschicht 6 vorgesehen, welche jeweils die durch die Temperatur bedingten Ausdehnungsänderungen der Trennschicht 2 bzw. der Abdeckung 5 kompensieren. Dafür weisen die Ausgleichsschichten 3, 6 in Bezug auf die thermischen Ausdehnungseigenschaften im Wesentlichen die gleichen Eigenschaften wie die Trennschicht 2 bzw. die Abdeckung 5 auf. Vorzugsweise besteht die innere Ausgleichsschicht aus dem gleichen Material wie die Trennschicht 2 und weisen beide Schichten 2, 5 die gleiche Dimensionierung auf. Entsprechendes gilt für die äußere Ausgleichsschicht 6 und die Abdeckung 5.

Das hier gezeigte Widerstandsthermometer besteht somit insgesamt aus 6 Schichten. Für das weitere Verständnis seien diese wie folgt nummeriert: 1: Substrat; 2: Trennschicht; 3: innere Ausgleichsschicht; 4: Widerstandselement; 5: Abdeckung und 6: äußere Ausgleichsschicht.

Jeder dieser Schichten weist eine Dicke $d_i$, ein Elastizitätsmodul $E_i$ und einen Wärmeausdehnungskoeffizienten $TCE_i$ auf. Weiterhin sei jede Schicht durch einen geometrische Formfaktor $F_i$ zwischen 0 und 1 gekennzeichnet, welcher die räumliche Anordnung der einzelnen Schichten berücksichtigt.

Aus diesen Größen ergibt sich näherungsweise der effektive Wärmeausdehnungskoeffizient $TCE_{eff}$ der gesamten Anordnung, also des gesamten Widerstandsthermometers zu:

$$TCE_{eff} = \frac{\sum_{i=1}^{N} TCE_i * d_i * E_i * F_i}{\sum_{i=1}^{N} d_i * E_i * F_i}$$

Dabei sollte insbesondere gelten, dass $TCE_{eff}$ >= $TCE_{Bulk-Metall}$ des Materials des Widerstandselements 4 als Bulk-Metall, der Wärmeausdehnungskoeffizient $TCE_{eff}$ des Widerstandsthermometers sollte größer als oder gleich dem Wärmeausdehnungskoeffizient $TCE_{Bulk-Metall}$ des Materials des Widerstandselements 4 als Bulk-Metall sein.

Dabei bezieht sich in der obigen Formel die Laufzahl i auf die einzelnen Schichten. N ist im gezeigten Fall gleich 6.

Ausgehend von dieser Formel lässt sich dann das Thermometer passend zum erforderlichen Temperaturkoeffizienten des Widerstandsthermometers dimensionieren.

Insbesondere hat sich gezeigt, dass der Temperaturkoeffizient des Widerstandsthermometers mit der Schichtdicke des Substrats 1 zunimmt, wobei eine Erhöhung der Dicke der Trennschicht 2 den Temperaturkoeffizienten wiederum verkleinert.

**Bezugszeichenliste**

1 Substrat
2 Trennschicht
3 Innere Ausgleichsschicht
4 Widerstandselement
5 Abdeckung
6 Äußere Ausgleichsschicht

**Patentansprüche**

1. Widerstandsthermometer,
   mit mindestens einem Substrat (1),
   und
   mit mindestens einem Widerstandselement (4), welches auf dem Substrat (1) angeordnet ist,
   wobei das Substrat (1) im Wesentlichen aus einem Material besteht, dessen Wärmeausdehnungskoeffizient größer als 10,5 ppm/K ist,
   und wobei mindestens eine elektrisch isolierende Trennschicht (2) vorgesehen ist, welche zwischen dem Widerstandselement (4) und dem Substrat (1) angeordnet ist,
   **dadurch gekennzeichnet,**
   **dass** auf der von dem Widerstandselement (4) abgewandten Seite des Substrats (1) mindestens eine innere Ausgleichsschicht (3) vorgesehen ist, die in Bezug auf eine durch die Temperatur verursachte Änderung der Ausdehnung im Wesentlichen gleich wie die Trennschicht (2) beschaffen ist.

2. Widerstandsthermometer nach Anspruch 1,
   **dadurch gekennzeichnet,**
   **dass** das Substrat (1) im Wesentlichen aus einem Material besteht, dessen Wärmeausdehnungskoeffizient zwischen 10,5 und 13,5 ppm/K liegt.

3. Widerstandsthermometer nach mindestens einem der vorhergehenden Ansprüche,
   **dadurch gekennzeichnet,**
   **dass** das Widerstandselement (4) im Wesentlichen aus Platin und/oder Nickel besteht.

4. Widerstandsthermometer nach mindestens einem der vorhergehenden Ansprüche,
   **dadurch gekennzeichnet,**
   **dass** das Widerstandselement (4) eine Schichtdicke zwischen 0,1 $\mu$m und 2 $\mu$m aufweist.

5. Widerstandsthermometer nach Anspruch 1,
   **dadurch gekennzeichnet,**
   **dass** die elektrisch isolierende Trennschicht (2) eine Dicke zwischen 0,5 $\mu$m und 50 $\mu$m aufweist.

6. Widerstandsthermometer nach Anspruch 1 oder 5,
   **dadurch gekennzeichnet,**
   **dass** die elektrisch isolierende Trennschicht (2) einen Wärmeausdehnungskoeffizienten zwischen 0,4 und 8 ppm/K aufweist.

7. Widerstandsthermometer nach mindestens einem der vorhergehenden Ansprüche,
   **dadurch gekennzeichnet,**
   **dass** mindestens eine elektrisch isolierende Abdeckung (5) vorgesehen ist, welche im Wesentlichen auf der von dem Substrat (1) abgewandten Seite des Widerstandselements (4) angeordnet ist,
   und **dass** die elektrisch isolierende Abdeckung (5) eine Dicke zwischen 0,5 $\mu$m und 100 $\mu$m aufweist.

8. Widerstandsthermometer nach mindestens einem der vorhergehenden Ansprüche,
   **dadurch gekennzeichnet,**
   **dass** das Substrat (1) im Wesentlichen aus Zirkoniumoxid besteht.

9. Widerstandsthermometer nach mindestens einem der vorhergehenden Ansprüche,
   **dadurch gekennzeichnet,**
   **dass** die Dicke des Substrats (1) zwischen 0,15 und 0,5 mm liegt.

10. Widerstandsthermometer nach mindestens einem der vorhergehenden Ansprüche,
    **dadurch gekennzeichnet,**
    **dass** die Bestandteile (1, 2, 3, 4, 5, 6) des Widerstandsthermometers derartig ausgestaltet und aufeinander abgestimmt sind, dass der resultierende effektive Wärmeausdehnungskoeffizient ($TCE_{eff}$) einem vorgebbaren Wert entspricht.
    und **dass** der effektive Wärmeausdehnungskoeffizient ($TCE_{eff}$) größer als oder gleich dem Wärmeausdehnungskoeffizient des Bulk-Metalls des Widerstandselements (4) ist.

11. Widerstandsthermometer nach mindestens einem der vorhergehenden Ansprüche,
    **dadurch gekennzeichnet,**
    **dass** auf der von dem Widerstandselement (4) abgewandten Seite des Substrats (1) mindestens eine äußere Ausgleichsschicht (6) vorgesehen ist. und **dass** die äußere Ausgleichsschicht (6) in Bezug auf eine durch die Temperatur verursachte Änderung der Ausdehnung im Wesentlichen gleich wie die Abdeckung (5) beschaffen ist.

12. Widerstandsthermometer nach mindestens einem der vorhergehenden Ansprüche,
    **dadurch gekennzeichnet,**
    **dass** das Substrat (1) im Wesentlichen aus Zirkoniumoxid besteht,
    **dass** das Substrat (1) eine Dicke zwischen 0,3 und 0,5 mm aufweist,
    **dass** das Widerstandselement (4) im Wesentlichen aus Platin besteht,
    **dass** das Widerstandselement (4) eine Dicke zwischen 0,45 und 2 $\mu$m aufweist,
    **dass** die Trennschicht (2) eine Dicke zwischen 0,5 und 40 $\mu$m aufweist und im Wesentlichen aus einer Glaskeramik mit einem Wärmeausdehnungskoeffizienten zwischen 6 und 7,5 ppm/K besteht, und
    **dass** die Abdeckung (5) eine Dicke zwischen 5 und 40 $\mu$m aufweist und im Wesentlichen aus einer Glaskeramik mit einem Wärmeausdehnungskoeffizienten zwischen 6 und 7,5 ppm/K besteht.

13. Widerstandsthermometer nach mindestens einem der vorhergehenden Ansprüche,
    **dadurch gekennzeichnet,**
    **dass** das Substrat (1) im Wesentlichen aus Zirkoniumoxid besteht,
    **dass** das Substrat (1) eine Dicke zwischen 0,3 und 0,5 mm aufweist,
    **dass** das Widerstandselement (4) im Wesentlichen aus Platin mit mindestens einer Fremdlegierung besteht,
    **dass** das Widerstandselement (4) eine Dicke zwischen 0,45 und 2 $\mu$m aufweist,
    **dass** die Trennschicht (2) eine Dicke zwischen 0,5 und 40 $\mu$m aufweist und im Wesentlichen aus einer Glaskeramik mit einem Wärmeausdehnungskoeffizienten zwischen 6 und 7,5 ppm/K besteht, und
    **dass** die Abdeckung (5) eine Dicke zwischen 5 und 40 $\mu$m aufweist und im Wesentlichen aus einer Glaskeramik mit einem Wärmeausdehnungskoeffizienten zwischen 6 und 7,5 ppm/K besteht.

14. Widerstandsthermometer nach mindestens einem der Ansprüche 1 bis 11, **dadurch gekennzeichnet,**

**dass** das Substrat (1) im Wesentlichen aus Zirkoniumoxid besteht,

**dass** das Substrat (1) eine Dicke zwischen 0,3 und 0,5 mm aufweist,

**dass** das Widerstandselement (4) im Wesentlichen aus Nickel besteht,

**dass** das Widerstandselement (4) eine Dicke zwischen 0,1 und 2 μm aufweist, dass die Trennschicht (2) eine Dicke zwischen 0,5 und 40 μm aufweist,

**dass** die Trennschicht (2) im Wesentlichen aus einer Glaskeramik besteht,

**dass** die Trennschicht (2) einen Wärmeausdehnungskoeffizienten zwischen 6 und 7,5 ppm/K aufweist,

und

**dass** die Abdeckung (5) im Wesentlichen aus einem Polymer oder aus Glas besteht.

15. Widerstandsthermometer nach mindestens einem der vorhergehenden Ansprüche,
**dadurch gekennzeichnet,**
**dass** das Substrat (1) im Wesentlichen aus Zirkoniumoxid besteht, welches zwischen 3Mol-% und 8Mol-% mit Yttrium und/oder zwischen 3Mol-% und 11Mol-% mit Scandium und/oder zwischen 0,5Mol-% und 4Mol-% mit Magnesium stabilisiert ist.

**Claims**

1. RTD assembly,
with at least one substrate (1),
and
with at least one resistance element (4), which is arranged on the substrate (1), wherein the substrate (1) is essentially made from a material whose thermal expansion coefficient is greater than 10.5 ppm/K,
and wherein at least one electrically isolating separation layer (2) is provided, said layer being arranged between the resistance element (4) and the substrate (1),
**characterized in that**
at least one inner compensation layer (3) is provided on the side of the substrate (1) facing away from the resistance element (4), said layer being designed in an essentially identical manner to the separation layer (2) in terms of a change in the expansion caused by the temperature.

2. RTD assembly as claimed in Claim 1,
**characterized in that**
the substrate (1) is essentially made from a material whose thermal expansion coefficient is between 10.5 and 13.5 ppm/K.

3. RTD assembly as claimed in at least one of the previous claims,

**characterized in that**
the resistance element (4) is essentially made from platinum and/or nickel.

4. RTD assembly as claimed in at least one of the previous claims,
**characterized in that**
the resistance element (4) has a layer thickness of between 0.1 μm and 2 μm.

5. RTD assembly as claimed in Claim 1,
**characterized in that**
the electrically isolating separation layer (2) has a thickness of between 0.5 μm and 50 μm.

6. RTD assembly as claimed in Claim 1 or 5,
**characterized in that**
the electrically isolating separation layer (2) has a thermal expansion coefficient of between 0.4 and 8 ppm/K.

7. RTD assembly as claimed in at least one of the previous claims,
**characterized in that**
at least an electrically isolating cover (5) is provided, which is essentially arranged on the side of the resistance element (4) facing away from the substrate (1), and **in that** the electrically isolating cover (5) has a thickness of between 0.5 μm and 100 μm.

8. RTD assembly as claimed in at least one of the previous claims,
**characterized in that**
the substrate (1) is essentially made from zirconium oxide.

9. RTD assembly as claimed in at least one of the previous claims,
**characterized in that**
the thickness of the substrate (1) is between 0.15 and 0.5 mm.

10. RTD assembly as claimed in at least one of the previous claims,
**characterized in that**
the components (1, 2, 3, 4, 5, 6) of the RTD assembly are designed and harmonized with one another in such a way that the resulting effective thermal expansion coefficient (TCE$_{eff}$) corresponds to a predefinable value,
and that the effective thermal expansion coefficient (TCE$_{eff}$) is greater than or equal to the thermal expansion coefficient of the bulk metal of the resistance element (4).

11. RTD assembly as claimed in at least one of the previous claims,
**characterized in that**

at least one outer compensation layer (6) is provided on the side of the substrate (1) facing away from the resistance element (4), said outer compensation layer (6) being designed in an essentially identical manner to the cover (5) in terms of a change in the expansion caused by the temperature.

12. RTD assembly as claimed in at least one of the previous claims,
**characterized in that**
the substrate (1) is essentially made from zirconium oxide,
the substrate (1) has a thickness of between 0.3 and 0.5 mm,
the resistance element (4) is essentially platinum,
the resistance element (4) has a thickness of between 0.45 and 2 $\mu$m,
the separation layer (2) has a thickness of between 0.5 and 40 $\mu$m and is essentially made from a glass ceramic with a thermal expansion coefficient of between 6 and 7.5 ppm/K,
and
**in that** the cover (5) has a thickness of between 5 and 40 $\mu$m and is essentially made from a glass ceramic with a thermal expansion coefficient of between 6 and 7.5 ppm/K.

13. RTD assembly as claimed in at least one of the previous claims,
**characterized in that**
the substrate (1) is essentially made from zirconium oxide,
the substrate (1) has a thickness of between 0.3 and 0.5 mm,
the resistance element (4) is essentially made from platinum with at least an added alloy,
the resistance element (4) has a thickness of between 0.45 and 2 $\mu$m,
the separation layer (2) has a thickness of between 0.5 and 40 $\mu$m and is essentially made from a glass ceramic with a thermal expansion coefficient of between 6 and 7.5 ppm/K,
and
**in that** the cover (5) has a thickness of between 5 and 40 $\mu$m and is essentially made from a glass ceramic with a thermal expansion coefficient of between 6 and 7.5 ppm/K.

14. RTD assembly as claimed in at least one of the Claims 1 to 11,
**characterized in that**
the substrate (1) is essentially made from zirconium oxide,
the substrate (1) has a thickness between 0.3 and 0.5 mm,
the resistance element (4) is essentially made from nickel,
the resistance element (4) has a thickness of between 0.1 and 2 $\mu$m,
the separation layer (2) has a thickness of between 0.5 and 40 $\mu$m,
the separation layer (2) is essentially made from a glass ceramic,
the separation layer (2) has a thermal expansion coefficient of between 6 and 7.5 ppm/K,
and
the cover (5) is essentially made from a polymer or glass.

15. RTD assembly as claimed in at least one of the previous claims,
**characterized in that**
the substrate (1) is essentially made from zirconium oxide, which is stabilized between 3 mole percent and 8 mole percent with yttrium and/or between 3 mole percent and 11 mole percent with scandium and/or between 0.5 mole percent and 4 mole percent with magnesium.

**Revendications**

1. Thermomètre à résistance,
avec au moins un substrat (1),
et
avec au moins un élément résistif (4), lequel est disposé sur le substrat (1), pour lequel le substrat (1) est constitué pour l'essentiel d'un matériau, dont le coefficient de dilatation thermique est supérieur à 10,5 ppm/K,
et pour lequel est prévue au moins une couche de séparation électriquement isolante (2), laquelle couche est disposée entre l'élément résistif (4) et le substrat (1),
**caractérisé**
**en ce qu'**est prévue, sur le côté du substrat (1) éloigné de l'élément résistif (4), au moins une couche de compensation intérieure (3), laquelle est constituée pour l'essentiel de façon identique à la couche de séparation (2) en ce qui concerne un changement de la dilatation occasionné par la température.

2. Thermomètre à résistance selon la revendication 1,
**caractérisé**
**en ce que** le substrat (1) est constitué pour l'essentiel d'un matériau dont le coefficient de dilatation thermique est situé entre 10,5 et 13,5 ppm/K.

3. Thermomètre à résistance selon au moins l'une des revendications précédentes,
**caractérisé**
**en ce que** l'élément résistif (4) est constitué pour l'essentiel de platine et/ou de nickel.

4. Thermomètre à résistance selon au moins l'une des revendications précédentes,

**caractérisé**
**en ce que** l'élément résistif (4) présente une épaisseur de couche comprise entre 0,1 μm et 2 μm.

5. Thermomètre à résistance selon la revendication 1, **caractérisé**
**en ce que** la couche de séparation électriquement isolante (2) présente une épaisseur comprise entre 0,5 μm et 50 μm.

6. Thermomètre à résistance selon la revendication 1 ou 5, **caractérisé**
**en ce que** la couche de séparation électriquement isolante (2) présente un coefficient de dilatation thermique compris entre 0,4 et 8 ppm/K.

7. Thermomètre à résistance selon au moins l'une des revendications précédentes, **caractérisé**
**en ce qu'**est prévue au moins une couche de recouvrement électriquement isolante (5), laquelle est disposée pour l'essentiel sur le côté de l'élément résistif (4) éloigné du substrat (1),
et **en ce que** la couche de recouvrement électriquement isolante (5) présente une épaisseur comprise entre 0,5 μm et 100 μm.

8. Thermomètre à résistance selon au moins l'une des revendications précédentes, **caractérisé**
**en ce que** le substrat (1) est constitué pour l'essentiel de zirconium.

9. Thermomètre à résistance selon au moins l'une des revendications précédentes, **caractérisé**
**en ce que** l'épaisseur du substrat (1) est comprise entre 0,15 et 0,5 mm.

10. Thermomètre à résistance selon au moins l'une des revendications précédentes, **caractérisé**
**en ce que** les composants (1, 2, 3, 4, 5, 6) du thermomètre à résistance sont conçus et assortis les uns aux autres de telle sorte que le coefficient de dilatation thermique effectif ($TCE_{eff}$) en résultant correspond à une valeur prédéfinissable, et en ce que le coefficient de dilatation thermique effectif ($TCE_{eff}$) est supérieur ou égal au coefficient de dilatation thermique du métal commun de l'élément résistif (4).

11. Thermomètre à résistance selon au moins l'une des revendications précédentes, **caractérisé**
**en ce qu'**est prévue, sur le côté du substrat (1) éloigné de l'élément résistif (4), au moins une couche de compensation extérieure (6),

et **en ce que** la couche de compensation extérieure (6) est constituée pour l'essentiel de façon identique à la couche de recouvrement (5) en ce qui concerne un changement de la dilatation occasionné par la température.

12. Thermomètre à résistance selon au moins l'une des revendications précédentes, **caractérisé**
**en ce que** le substrat (1) est constitué pour l'essentiel d'oxyde de zirconium,
**en ce que** le substrat (1) présente une épaisseur comprise entre 0,3 et 0,5 mm, en ce que l'élément résistif (4) est constitué pour l'essentiel de platine,
**en ce que** l'élément résistif (4) présente une épaisseur comprise entre 0,45 et 2 μm,
**en ce que** la couche de séparation (2) présente une épaisseur comprise entre 0,5 et 40 μm et est constituée pour l'essentiel de vitrocéramique présentant un coefficient de dilatation thermique compris entre 6 et 7,5 ppm/K,
et
**en ce que** la couche de recouvrement (5) présente une épaisseur comprise entre 5 et 40 μm et est constituée pour l'essentiel d'une vitrocéramique présentant un coefficient de dilatation thermique compris entre 6 et 7,5 ppm/K.

13. Thermomètre à résistance selon au moins l'une des revendications précédentes, **caractérisé**
**en ce que** le substrat (1) est constitué pour l'essentiel d'oxyde de zirconium,
**en ce que** le substrat (1) présente une épaisseur comprise entre 0,3 et 0,5 mm,
**en ce que** l'élément résistif (4) est constitué pour l'essentiel de platine avec au moins un alliage ajouté,
**en ce que** l'élément résistif (4) présente une épaisseur comprise entre 0,45 et 2 μm,
**en ce que** la couche de séparation (2) présente une épaisseur comprise entre 0,5 et 40 μm et est constituée pour l'essentiel de vitrocéramique présentant un coefficient de dilatation thermique compris entre 6 et 7,5 ppm/K,
et
**en ce que** la couche de recouvrement (5) présente une épaisseur comprise entre 5 et 40 μm et est constituée pour l'essentiel d'une vitrocéramique présentant un coefficient de dilatation thermique compris entre 6 et 7,5 ppm/K.

14. Thermomètre à résistance selon au moins l'une des revendications 1 à 11, **caractérisé**
**en ce que** le substrat (1) est constitué pour l'essentiel d'oxyde de zirconium,
**en ce que** le substrat (1) présente une épaisseur comprise entre 0,3 et 0,5 mm,

**en ce que** l'élément résistif (4) est constitué pour l'essentiel de nickel,

**en ce que** l'élément résistif (4) présente une épaisseur comprise entre 0,1 et 2 $\mu$m,

**en ce que** la couche de séparation (2) présente une épaisseur comprise entre 0,5 et 40 $\mu$m,

**en ce que** la couche de séparation (2) est constituée pour l'essentiel de vitrocéramique,

**en ce que** la couche de séparation (2) présente un coefficient de dilatation thermique compris entre 6 et 7,5 ppm/K,

et

**en ce que** la couche de recouvrement (5) est constituée pour l'essentiel d'un polymère ou de verre.

15. Thermomètre à résistance selon au moins l'une des revendications précédentes,
**caractérisé**
**en ce que** le substrat (1) est constitué pour l'essentiel d'oxyde de zirconium, lequel est stabilisé entre 3 pour cent en moles et 8 pour cent en moles avec de l'yttrium et/ou entre 3 pour cent en moles et 11 pour cent en moles avec du scandium et/ou entre 0,5 pour cent en moles et 4 pour cent en moles avec du magnésium.

# Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4300084 A1
- DE 19540194 C1
- EP 0471138 A2